# EUROPEAN PATENT APPLICATION

(11) **EP 4 327 935 A1**
(43) Date of publication of application: **28.02.2024**
(21) Application number: 22925232.5
(22) Date of filing: 28.09.2022
(51) Int. Cl.: B01J 20/26, B01J 20/30, C22B 7/00

(54) **PLGLU-SS-LITHIUM ION SIEVE COMPOSITE MATERIAL, PREPARATION METHOD THEREFOR, AND USE THEREOF**

(30) Priority: 15.07.2022 CN 202210836693
(71) Applicant: Guangdong Brunp Recycling Technology Co., Ltd, Foshan, Guangdong 528100 (CN); Hunan Brunp Recycling Technology Co., Ltd., Changsha, Hunan 410600 (CN)
(72) Inventor: LI, Aixia, Foshan, Guangdong 528137 (CN); YU, Haijun, Foshan, Guangdong 528137 (CN); XIE, Yinghao, Foshan, Guangdong 528137 (CN); ZHANG, Xuemei, Foshan, Guangdong 528137 (CN); LI, Changdong, Foshan, Guangdong 528137 (CN)
(74) Representative: Meyer, Thorsten
(86) International application number: PCT/CN2022/122259
(87) International publication number: WO 2024/011760

(57) **Abstract**

The present disclosure discloses a PLGlu-SS-lithium ion-sieve composite, and a preparation method and use thereof. The PLGlu-SS-lithium ion-sieve composite includes an H₃LiMnTi₄O₁₂ lithium ion-sieve and poly-γ-glutamic acid (γ-PGA) compounded with the H₃LiMnTi₄O₁₂ lithium ion-sieve, where a terminal amino group of the γ-PGA is linked to a disulfide bond-containing group. In the present disclosure, the H₃LiMnTi₄O₁₂ lithium ion-sieve is used as a support structure, which has sufficient strength support, high structural stability, and excellent cycling performance; and the pores and surface of the H₃LiMnTi₄O₁₂ lithium ion-sieve both are bonded with PLGlu-SS. At a low pH, PLGlu-SS is protonated and folded to formα-helix, and at a high pH, PLGlu-SS is deprotonated and extended. Thus, under alkaline adsorption and acidic desorption, a pore size of the composite can be adjusted to provide large adsorption capacity, high adsorption selectivity, and high adsorption efficiency. Therefore, the composite is an efficient lithium ion adsorption material with high adsorption capacity and high stability.

## Description

### TECHNICAL FIELD

The present disclosure belongs to the field of lithium functional materials extracted from salt lakes, and specifically relates to a PLGlu-SS-lithium ion-sieve composite, and a preparation method and use thereof.

### BACKGROUND

Lithium, known as an energy metal and "industrial monosodium glutamate" in the new century, has high reactivity, and thus lithium in the nature does not exist in the form of a metal element. Lithium carbonate is an important lithium compound, and other lithium products are basically downstream products of lithium carbonate.

Due to a low magnesium-lithium ratio in lithium salt lake resources and superior solar evaporation conditions at salt lake beaches in other countries, the salt field concentration and precipitation method is mainly used for lithium extraction, and this technical route includes the following three stages: salt field evaporation, separation of lithium from other ions, and purification and precipitation. The traditional technologies for extracting lithium from salt lake resources in other countries mainly include the Atacama method, the FMC method, and the Olaroz method. Among the salt lake lithium resources in China, a lithium reserve in Qinghai Province accounts for nearly 50% and a lithium reserve in the Tibet Autonomous Region accounts for 30%. The Qinghai Province has relatively-abundant salt lake resources and superior solar evaporation conditions, however, due to a relatively high magnesium-lithium ratio in salt lake brine, the relatively-mature salt field concentration and precipitation method in other countries cannot be replicated in China. Limited by geographical conditions, the development of lithium extraction from salt lake resources in the Tibet Autonomous Region is still in an initial stage. Therefore, in view of complicated composition and a relatively-low lithium content of salt lake brine, a method for selective extraction of lithium and concentrated crystallization of a lithium salt is required. The existing methods for selective extraction of lithium and concentrated crystallization of a lithium salt mainly include an electrochemical separation method, a membrane separation method, a precipitation method, a solvent extraction method, and an ion sieve adsorption method.

Lithium ion sieves have high lithium ion adsorption capacity, prominent lithium ion selectivity, and excellent cycling performance, and can effectively separate and extract lithium ions from an aqueous solution with different ions. However, lithium ion sieves have a disadvantage that the reaction rate and selectivity are low during elution and adsorption. Therefore, improving the extraction efficiency of lithium ion sieves is an urgent problem to be solved.

### SUMMARY

In order to overcome the shortcomings of the prior art, a first objective of the present disclosure is to provide a PLGlu-SS-lithium ion-sieve composite. The composite has sufficient strength support, high structural stability, and prominent cycling performance, and a porous structure and an adjustable pore size of the composite can provide large adsorption capacity and high adsorption selectivity, which can improve the adsorption efficiency.

A second objective of the present disclosure is to provide a preparation method of the PLGlu-SS-lithium ion-sieve composite described above.

A third objective of the present disclosure is to provide use of the PLGlu-SS-lithium ion-sieve composite described above.

The first objective of the present disclosure may be achieved through the following technical solution:

APLGlu-SS-lithium ion-sieve composite is provided, including an H₃LiMnTi₄O₁₂ lithium ion-sieve and poly-γ-glutamic acid (γ-PGA) compounded with the H₃LiMnTi₄O₁₂ lithium ion-sieve, wherein a terminal amino group of the γ-PGA is linked to a disulfide bond-containing group and a terminal carboxyl group of the γ-PGA is bonded with Ti and Mn in the H₃LiMnTi₄O₁₂ lithium ion-sieve.

Further, the disulfide bond-containing group is a group having -CO-R¹-S-S-R²-COOH, wherein R¹ and R² each are linear alkyl with 9 to 16 carbon atoms.

Further, a precursor of the H₃LiMnTi₄O₁₂ lithium ion-sieve is Li₄MnTi₄O₁₂, and Li₄MnTi₄O₁₂ is treated with an acid to obtain the H₃LiMnTi₄O₁₂ lithium ion-sieve.

Further, the γ-PGA has a molar molecular weight of 1,500 g/mol to 5,500 g/mol.

The second objective of the present disclosure may be achieved through the following technical solution:

A preparation method of a PLGlu-SS-LIS composite is provided, including the following steps:
S1. preparation of a lithium ion-sieve: mixing a Mn²⁺-containing aqueous solution and a Ti⁴⁺-containing aqueous solution and adjusting a pH to 10 to 11 with ammonium hydroxide under stirring, adding hydrogen peroxide to oxidize Mn²⁺ into Mn⁴⁺, centrifuging a resulting reaction mixture, washing a resulting precipitate to obtain a solid, adding a LiOH solution to the solid, conducting hydrothermal crystallization to obtain a Li-Mn-Ti composite oxide, and cooling to 90°C to 100°C; and
S2. preparation of the PLGlu-SS-LIS composite:
   adding PLGlu-SS to the Li-Mn-Ti composite oxide to allow a reaction, adding an excess amount of hydrochloric acid after the reaction is completed, stirring a resulting mixture to allow a further reaction for 12 h to 24 h, and subjecting a resulting reaction system to suction filtration to obtain the PLGlu-SS-lithium ion-sieve composite.

Further, a preparation method of the PLGlu-SS includes the following steps:
S21. adding mercaptoalkyl acid to a solution of hydrochloric acid in dimethyl sulfoxide to allow a reaction under stirring to obtain a disulfide bond-containing compound;
S22. adding the disulfide bond-containing compound to dimethylformamide (DMF), adding o-(7-aza-1H-benzotriazol-1-yl)-N,N,N',N'-tetramethyluronium hexafluorophosphate (HATU) and diisopropylethylamine (DIEA), then adding γ-PGA benzyl ester to allow an another reaction under stirring, and conducting recrystallization with methanol after the another reaction is completed to obtain a crystallization product; and
S23. dissolving the crystallization product in a mixed solvent of dioxane and methanol, adding sodium hydroxide, stirring at room temperature for 1 h to 3 h, and dissolving a resulting precipitate in water and conducting ultrafiltration with an ultrafiltration membrane to obtain the PLGlu-SS.

Further, in step S21, the reaction is conducted for 12 h to 24 h;
in step S22, a molar ratio of the disulfide bond-containing compound to HATU to DIEA is 1:(2-2.5):(2-3), a molar ratio of the γ-PGA benzyl ester to the disulfide bond-containing compound is 1:(1-2), and the another reaction is conducted at a temperature of 0 °C to 25 °C for 12 h to 36 h; and
in step S23, a volume ratio of the dioxane to the methanol is (5-2): 1, a concentration of the sodium hydroxide after the sodium hydroxide is added is 2 mol/L to 5 mol/L, and the ultrafiltration membrane has a molecular weight cut-off of lower than 10,000 daltons.

Further, Mn²⁺ is provided by one or more selected from the group consisting of manganese sulfate, manganese oxalate, and manganese acetate, and Ti⁴⁺ is provided by one selected from the group consisting of titanium tetrachloride and titanium sulfate.

Further, a molar ratio of Mn²⁺ to Ti⁴⁺ is 1:(4-4.5), a molar ratio of LiOH to Ti⁴⁺ is (1-1.2): 1, and the hydrothermal crystallization is conducted at a temperature of 750°C to 850°C.

The third objective of the present disclosure may be achieved through the following technical solution:
Use of the PLGlu-SS-lithium ion-sieve composite in lithium extraction from a salt lake is provided.

Compared with the prior art, the present disclosure has the following beneficial effects:
1. In the PLGlu-SS-lithium ion-sieve composite of the present disclosure, the H₃LiMnTi₄O₁₂ lithium ion-sieve is used as a support structure, which has sufficient strength support, high structural stability, and excellent cycling performance; and the pores and surface of the lithium ion-sieve both are bonded with PLGlu-SS. At a low pH, PLGlu-SS is protonated and folded to formα-helix, and at a high pH, PLGlu-SS is deprotonated and extended. Thus, under alkaline adsorption and acidic desorption, a pore size of the composite can be adjusted to provide large adsorption capacity, high adsorption selectivity, and high adsorption efficiency. Therefore, the composite has high adsorption capacity and high stability.
2. In the preparation method of the PLGlu-SS-lithium ion-sieve composite of the present disclosure, a lithium ion-sieve is modified by compounding with PLGlu-SS to obtain a functionalized lithium ion-sieve.
3. The PLGlu-SS-lithium ion-sieve composite of the present disclosure exhibits an excellent lithium adsorption effect for salt lake brine with a low lithium-magnesium ratio.

### BRIEF DESCRIPTION OF THE DRAWINGS

FIG. 1 is a scanning electron microscopy (SEM) image of a H₃LiMnTi₄O₁₂ lithium ion-sieve in Comparative Example 1;
FIG. 2 is an SEM image of a PLGlu-SS-lithium ion-sieve in Example 4;
FIG. 3 shows a pore size distribution of the H₃LiMnTi₄O₁₂ lithium ion-sieve in Comparative Example 1;
FIG. 4 shows a pore size distribution of the PLGlu-SS-lithium ion-sieve in Example 4;
FIG. 5 shows a change of an adsorption amount over time of each of the H₃LiMnTi₄O₁₂ lithium ion-sieve and the PLGlu-SS-lithium ion-sieve in a solution with a Li⁺ concentration of 20 mg/L;
FIG. 6 shows a change of an adsorption amount over time of each of the H₃LiMnTi₄O₁₂ lithium ion-sieve and the PLGlu-SS-lithium ion-sieve in a solution with a Li⁺ concentration of 5,000 mg/L; and
FIG. 7 shows a change of lithium ion desorption of the H₃LiMnTi₄O₁₂ lithium ion-sieve and the PLGlu-SS-lithium ion-sieve over time.

### DETAILED DESCRIPTION

The technical solutions in the present disclosure will be clearly and completely described below in conjunction with specific examples. Apparently, the described examples are some rather than all of the examples of the present disclosure. All other examples obtained by a person of ordinary skill in the art based on the examples of the present disclosure without creative efforts shall fall within the protection scope of the present disclosure.

The existing lithium ion-sieves mainly includes manganese-based lithium ion-sieves and titanium-based lithium ion-sieves. Manganese will be partly dissolved when a manganese-based lithium ion-sieve is subjected to lithium elution with an acid, which weakens the structural stability and adsorption performance of the manganese-based lithium ion-sieve and shortens the cycling life of the manganese-based lithium ion-sieve. The titanium-based lithium ion-sieves have a relatively low dissolution loss and exhibit better chemical performance and selective adsorption for Li⁺ than the manganese-based lithium ion-sieves. However, a powdery titanium-based lithium ion-sieve has large Li⁺ mass transfer diffusion resistance and low active ingredient utilization efficiency. Therefore, in the present disclosure, H₃LiMnTi₄O₁₂ is used as a main body of an ion sieve, and the ion sieve is modified with PLGlu-SS to improve the adsorption performance of the ion sieve.

APLGlu-SS-lithium ion-sieve composite is provided, including an H₃LiMnTi₄O₁₂ lithium ion-sieve and γ-PGA compounded with the H₃LiMnTi₄O₁₂ lithium ion-sieve, wherein a terminal amino group of the γ-PGA is linked to a disulfide bond-containing group and a terminal carboxyl group of the γ-PGA is bonded with Ti and Mn in the H₃LiMnTi₄O₁₂ lithium ion-sieve.

The H₃LiMnTi₄O₁₂ lithium ion-sieve is used as a support structure, which has sufficient strength support, high structural stability, and excellent cycling performance; and the pores and surface of the lithium ion-sieve both are bonded with PLGlu-SS. At a low pH, PLGlu-SS is protonated and folded to formα-helix to increase a pore size, such that H⁺ can smoothly contact Li⁺ to exchange with Li⁺ and Li⁺ can smoothly flow out of the pores, thereby achieving desorption. At a high pH, PLGlu-SS is deprotonated and extended. Thus, under alkaline adsorption and acidic desorption, a pore size of the composite can be adjusted to provide large adsorption capacity, high adsorption selectivity, and high adsorption efficiency.

In an embodiment, the disulfide bond-containing group is a group with -CO-R¹-S-S-R²-COOH, wherein R¹ and R² each are linear alkyl with 9 to 16 carbon atoms.

The folding and extension of the disulfide bond-containing group change the surface and pore structure of the lithium ion-sieve. Glutamic acid has an ionic coupling effect and can capture ions to the surface of the lithium ion-sieve; and the disulfide bond-containing group in the pores can extend during alkaline adsorption to reduce a pore size of the pores, such that Li⁺ with a small ion radius can further move to adsorption sites in the pores. Thus, a volume after the disulfide bond-containing group is extended and folded is a main factor affecting the lithium ion adsorption. Therefore, volumes of R¹ and R² (linear alkyls with 9 to 16 carbon atoms) during the extension and folding allow the smooth passage of Li⁺, thereby improving the adsorption and desorption effect.

In an embodiment, a precursor of the H₃LiMnTi₄O₁₂ lithium ion-sieve is Li₄MnTi₄O₁₂, and Li₄MnTi₄O₁₂ is treated with an acid to obtain the H₃LiMnTi₄O₁₂ lithium ion-sieve.

In an embodiment, the γ-PGA has a molar molecular weight of 1,500 g/mol to 5,500 g/mol.

To facilitate the binding in the pores, the molecular weight of γ-PGA should not be too large and thus is limited to 5,500 g/mol or lower; and to ensure the structural stability, the molecular weight of γ-PGA is limited to 1,500 g/mol or higher to prevent the structure from being destructed during adsorption and elution.

The present disclosure also provides a preparation method of a PLGlu-SS-lithium ion-sieve composite, including the following steps:
S1. preparation of a lithium ion-sieve: mixing a Mn²⁺-containing aqueous solution and a Ti⁴⁺-containing aqueous solution and adjusting a pH to 10 to 11 with ammonium hydroxide under stirring, adding hydrogen peroxide to oxidize Mn²⁺ into Mn⁴⁺, centrifuging a resulting reaction mixture, washing a resulting precipitate to obtain a solid, adding a LiOH solution to the solid, conducting hydrothermal crystallization to obtain a Li-Mn-Ti composite oxide, and cooling to 90°C to 100°C; and
S2. preparation of the PLGlu-SS-lithium ion-sieve composite:
   adding the PLGlu-SS to the Li-Mn-Ti composite oxide to allow a reaction, adding an excess amount of hydrochloric acid after the reaction is completed, stirring a resulting mixture to allow a further reaction for 12 h to 24 h, and subjecting a resulting reaction system to suction filtration to obtain the PLGlu-SS-lithium ion-sieve composite.

PLGlu-SS is a compound obtained by linking a disulfide bond-containing group to γ-PGA. The disulfide bond-containing group is a group with -CO-R¹-S-S-R²-COOH, wherein R¹ and R² both are linear alkyl with 9 to 16 carbon atoms, and a carbonyl group of a disulfide bond and a terminal amino group of γ-PGA are linked to form PLGlu-SS.

In an embodiment, a preparation method of the PLGlu-SS includes the following steps:
S21. adding mercaptoalkyl acid to a solution of hydrochloric acid in dimethyl sulfoxide to allow a reaction under stirring to obtain a disulfide bond-containing compound;
S22. adding the disulfide bond-containing compound to DMF, adding HATU and DIEA, then adding γ-PGA benzyl ester to allow an another reaction under stirring, and conducting recrystallization with methanol after the another reaction is completed to obtain a crystallization product; and
S23. dissolving the crystallization product in a mixed solvent of dioxane and methanol, adding sodium hydroxide, stirring at room temperature for 1 h to 3 h, and dissolving a resulting precipitate in water and conducting ultrafiltration with an ultrafiltration membrane to obtain the PLGlu-SS.

In an embodiment, in step S21, the reaction is conducted for 12 h to 24 h;
in step S22, a molar ratio of the disulfide bond-containing compound to HATU to DIEA is 1:(2-2.5):(2-3), a molar ratio of the γ-PGA benzyl ester to the disulfide bond-containing compound is 1 :(1-2), and the another reaction is conducted at a temperature of 0 °C to 25 °C for 12 h to 36 h; and
in step S23, a volume ratio of the dioxane to the methanol is (5-2): 1, a concentration of the sodium hydroxide after the sodium hydroxide is added is 2 mol/L to 5 mol/L, and the ultrafiltration membrane has a molecular weight cut-off of lower than 10,000 daltons.

In an embodiment, Mn²⁺ is provided by one or more selected from the group consisting of manganese sulfate, manganese oxalate, and manganese acetate, and Ti⁴⁺ is provided by one selected from the group consisting of titanium tetrachloride and titanium sulfate.

In an embodiment, a molar ratio of Mn²⁺ to Ti⁴⁺ is 1:(4-4.5), a molar ratio of LiOH to Ti⁴⁺ is (1-1.2): 1, and the hydrothermal crystallization is conducted at a temperature of 750 °C to 850 °C.

The PLGlu-SS-lithium ion-sieve composite of the present disclosure can be used in lithium extraction from a salt lake.

### Example 1:

### Preparation of PLGlu-SS

11-Mercaptoundecanoic acid was added to a dimethyl sulfoxide solution with hydrochloric acid at a concentration of 1 mol/L, and a resulting mixture was stirred to allow a reaction for 16 h to produce a disulfide bond-containing compound; a large amount of water was added for precipitation, and a resulting precipitate was collected to obtain a disulfide bond-containing compound; 2 mmol of the disulfide bond-containing compound was added to DMF, then 4.4 mmol of HATU and 5 mmol of DIEA were added, then 3 mmol of γ-PGA benzyl ester was added to allow a reaction for 24 h under stirring at 15 °C; after the reaction was completed, recrystallization was conducted with methanol; a crystallization product was dissolved in a mixed solvent of 6 mL of dioxane and 3 mL of methanol, sodium hydroxide was added until its concentration was 3 mol/L, and a resulting reaction mixture was stirred at room temperature for 2 h; and another resulting precipitate was collected and dissolved in water, a resulting solution was subjected to ultrafiltration by an ultrafiltration membrane with a molecular weight cut-off of 10,000, and a concentrate was lyophilized to obtain the PLGlu-SS.

### Example 2:

### Preparation of PLGlu-SS

16-Mercaptohexadecanoic acid was added to a dimethyl sulfoxide solution with hydrochloric acid at a concentration of 1 mol/L, and a resulting mixture was stirred to allow a reaction for 24 h to produce a disulfide bond-containing compound; a large amount of water was added for precipitation, and a resulting precipitate was collected to obtain a disulfide bond-containing compound; 2 mmol of the disulfide bond-containing compound was added to DMF, then 4 mmol of HATU and 6 mmol of DIEA were added, then 2 mmol of γ-PGA benzyl ester was added to allow a reaction for 12 h under stirring at 25 °C; after the reaction was completed, recrystallization was conducted with methanol; a crystallization product was dissolved in a mixed solvent of 10 mL of dioxane and 2 mL of methanol, sodium hydroxide was added until its concentration was 2 mol/L, and a resulting reaction mixture was stirred at room temperature for 3 h; and another resulting precipitate was collected and dissolved in water, a resulting solution was subjected to ultrafiltration by an ultrafiltration membrane with a molecular weight cut-off of 10,000, and a concentrate was lyophilized to obtain the PLGlu-SS.

### Example 3:

### Preparation of PLGlu-SS

9-Mercaptononanoic acid was added to a dimethyl sulfoxide solution with hydrochloric acid at a concentration of 1 mol/L, and a resulting mixture was stirred to allow a reaction for 12 h to produce a disulfide bond-containing compound; a large amount of water was added for precipitation, and a resulting precipitate was collected to obtain a disulfide bond-containing compound; 2 mmol of the disulfide bond-containing compound was added to DMF, then 5 mmol of HATU and 4 mmol of DIEA were added, then 4 mmol of γ-PGA benzyl ester was added to allow a reaction for 36 h under stirring at 0 °C; after the reaction was completed, recrystallization was conducted with methanol; a crystallization product was dissolved in a mixed solvent of 7 mL of dioxane and 2 mL of methanol, sodium hydroxide was added until its concentration was 5 mol/L, and a resulting reaction mixture was stirred at room temperature for 1 h; and another resulting precipitate was collected and dissolved in water, a resulting solution was subjected to ultrafiltration by an ultrafiltration membrane with a molecular weight cut-off of 10,000, and a concentrate was lyophilized to obtain the PLGlu-SS.

### Example 4:

### Preparation of a PLGlu-SS-lithium ion-sieve composite:

Preparation of a lithium ion-sieve: A MnSO₄ aqueous solution and a Ti(SO₄)₂ aqueous solution were mixed in a molar ratio of Mn²⁺ to Ti⁴⁺ of 1:4, a pH was adjusted to 10 to 11 with ammonium hydroxide under stirring, hydrogen peroxide was added to oxidize Mn²⁺ into Mn⁴⁺, a resulting solid was collected through centrifugation and washed with water until there was no sulfate, the solid was added to a LiOH solution in which LiOH was contained in a same amount as Ti(SO₄)₂, hydrothermal crystallization was conducted at 800 °C to produce a Li-Mn-Ti composite oxide, and a resulting reaction system was cooled to 95 °C. Preparation of the PLGlu-SS-lithium ion-sieve composite: The PLGlu-SS prepared in Example 1 was added to the Li-Mn-Ti composite oxide to allow a reaction at 95 °C; after the reaction was completed, a resulting reaction mixture was cooled to room temperature, an excess amount of 2 mol/L hydrochloric acid was added to allow another reaction for 18 h under stirring, suction filtration was conducted to give a filter residue after the another reaction was completed, the filter residue was added to 2 mol/L hydrochloric acid again, and a resulting mixture was stirred at room temperature for 18 h and then subjected to suction filtration to obtain the PLGlu-SS-lithium ion-sieve composite.

### Example 5:

### Preparation of a PLGlu-SS-lithium ion-sieve composite:

Preparation of a lithium ion-sieve: A manganese oxalate aqueous solution and a titanium tetrachloride aqueous solution were mixed in a molar ratio of Mn²⁺ to Ti⁴⁺ of 1:4.2, a pH was adjusted to 10 to 11 with ammonium hydroxide under stirring, hydrogen peroxide was added to oxidize Mn²⁺ into Mn⁴⁺, a resulting solid was collected through centrifugation and washed with water, and the solid was added to a LiOH solution in which LiOH was contained in an amount of 1.1 times the amount of titanium tetrachloride, hydrothermal crystallization was conducted at 750 °C to produce a Li-Mn-Ti composite oxide, and a resulting reaction system was cooled to 100°C,. Preparation of the PLGlu-SS-lithium ion-sieve composite: The PLGlu-SS prepared in Example 2 was added to the Li-Mn-Ti composite oxide to allow a reaction at 100 °C; after the reaction was completed, a resulting reaction mixture was cooled to room temperature, an excess amount of 2 mol/L hydrochloric acid was added to allow another reaction for 12 h under stirring, suction filtration was conducted to give a filter residue after the another reaction was completed, the filter residue was added to 2 mol/L hydrochloric acid again, and a resulting mixture was stirred at room temperature for 24 h and then subjected to suction filtration to obtain the PLGlu-SS-lithium ion-sieve composite.

### Example 6:

### Preparation of a PLGlu-SS-lithium ion-sieve composite:

Preparation of a lithium ion-sieve: A manganese acetate aqueous solution and a Ti(SO4)₂ aqueous solution were mixed in a molar ratio of Mn²⁺ to Ti⁴⁺ of 1:4.5, a pH was adjusted to 10 to 11 with ammonium hydroxide under stirring, hydrogen peroxide was added to oxidize Mn²⁺ into Mn⁴⁺, a resulting solid was collected through centrifugation and washed with water, the solid was added to a LiOH solution in which LiOH was contained in an amount of 1.2 times the amount of Ti(SO4)₂, hydrothermal crystallization was conducted at 850 °C to produce a Li-Mn-Ti composite oxide, and a resulting reaction system was cooled to 90 °C. Preparation of the PLGlu-SS-lithium ion-sieve composite: The PLGlu-SS prepared in Example 3 was added to the Li-Mn-Ti composite oxide to allow a reaction at 90 °C; after the reaction was completed, a resulting reaction mixture was cooled to room temperature, an excess amount of 2 mol/L hydrochloric acid was added, to allow another reaction for 24 h under stirring, suction filtration was conducted to give a filter residue after the another reaction was completed, the filter residue was added to 2 mol/L hydrochloric acid again, and a resulting mixture was stirred at room temperature for 24 h and then subjected to suction filtration to obtain the PLGlu-SS-lithium ion-sieve composite.

### Comparative Example 1:

This comparative example was different from Example 4 in that the Li-Mn-Ti composite oxide was directly mixed with the 2 mol/L hydrochloric acid without the addition of the PLGlu-SS in Example 1, and a resulting mixture was stirred to allow a reaction for 18 h and then subjected to suction filtration to obtain an H₃LiMnTi₄O₁₂ lithium ion-sieve.

### Test Example:

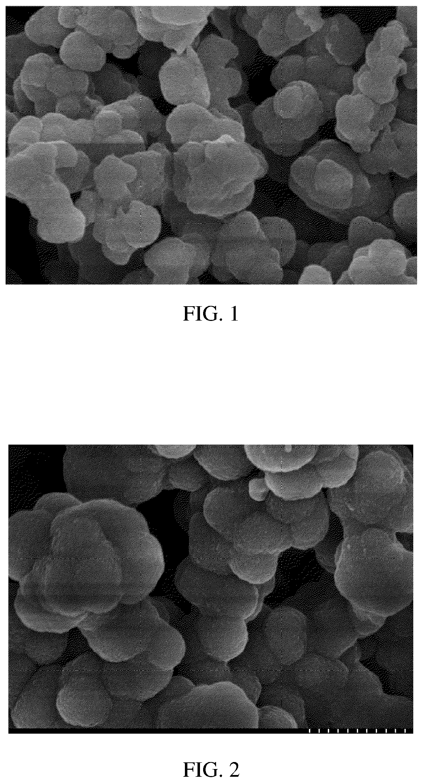

SEM characterization: The H₃LiMnTi₄O₁₂ lithium ion-sieve in Comparative Example 1 and the PLGlu-SS-lithium ion-sieve in Example 4 each were subjected to SEM characterization, and resulting SEM images were shown in FIG. 1 and FIG. 2, respectively.

The H₃LiMnTi₄O₁₂ lithium ion-sieve in FIG. 1 has a rough surface, many pores, and a block structure as a whole. It can be seen from FIG. 2 that, after PLGlu-SS is bonded to the lithium ion-sieve, a surface of the lithium ion-sieve is covered with a rough material layer, the block structure becomes rounded, and block layers are linked holistically. Therefore, it can be speculated that the bonding of PLGlu-SS to the H₃LiMnTi₄O₁₂ lithium ion-sieve can greatly improve the surface area and the pore structure.

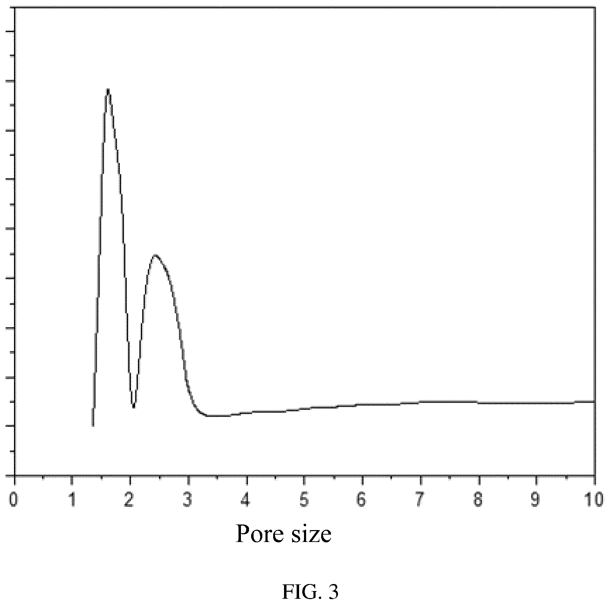

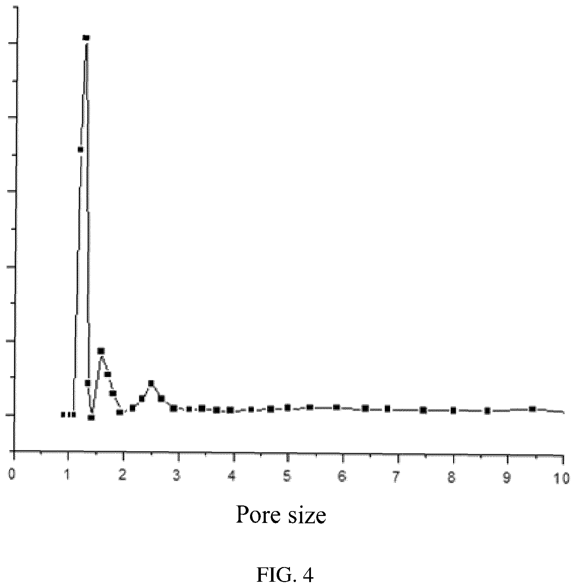

Pore size analysis: The H₃LiMnTi₄O₁₂ lithium ion-sieve in Comparative Example 1 and the PLGlu-SS-lithium ion-sieve in Example 4 each were subjected to a specific surface area test for pore size analysis, where a pore size distribution of the H₃LiMnTi₄O₁₂ lithium ion-sieve in Comparative Example 1 was shown in FIG. 3 and a pore size distribution of the PLGlu-SS-lithium ion-sieve in Example 4 was shown in FIG. 4.

It can be seen from FIG. 3 that the pore size distribution of the H₃LiMnTi₄O₁₂ lithium ion-sieve is mainly concentrated at 1.7 nm and 2.5 nm. It can be seen from FIG. 4 that the pore size distribution of the PLGlu-SS-lithium ion-sieve obtained through PLGlu-SS bonding at 2.5 nm and 1.7 nm is reduced, and the pore size distribution is concentrated at 1.25 nm, indicating that PLGlu-SS successfully modifies the pores of the H₃LiMnTi₄O₁₂ lithium ion-sieve.

### Experimental Example:

### Lithium ion adsorption experiment:

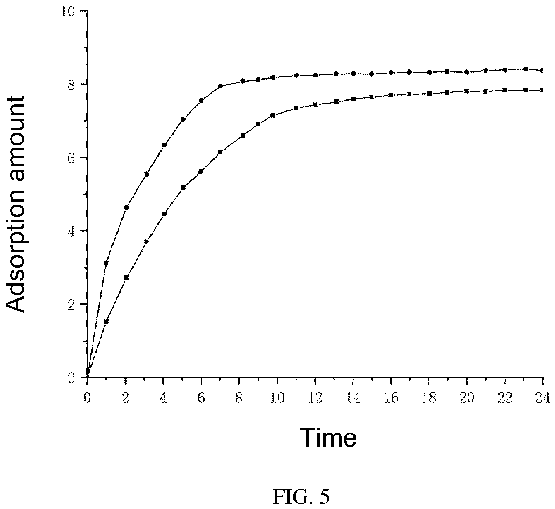

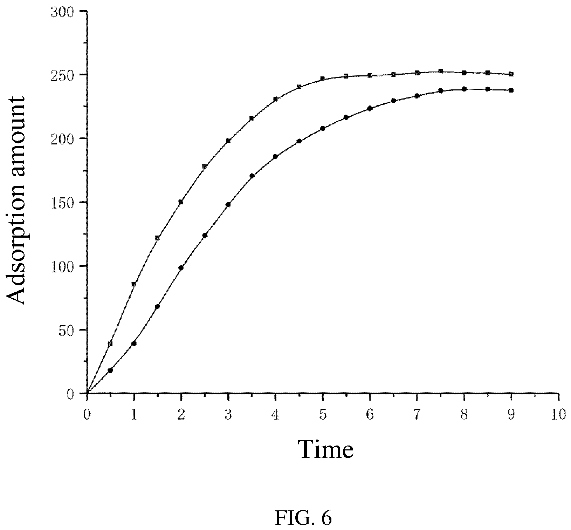

Solutions with Li⁺ concentrations of 20 mg/L and 5,000 mg/L respectively were prepared, and a pH of each of the solutions was adjusted with KOH to 11; and 2 g of each of the PLGlu-SS-lithium ion-sieve in Example 1 and the H₃LiMnTi₄O₁₂ lithium ion-sieve in Comparative Example 1 was taken and added to the solutions with Li⁺ concentrations of 20 mg/L and 5,000 mg/L, respectively, and resulting mixtures were magnetically stirred for 24 h at room temperature to allow adsorption. A Li⁺ concentration in each solution was determined every 1 h, and an adsorption amount of each of the PLGlu-SS-lithium ion-sieve in Example 1 and the H₃LiMnTi₄O₁₂ lithium ion-sieve in Comparative Example 1 in the solutions was calculated. Results were shown in FIG. 5 and FIG. 6.

As shown in FIG. 5, in the case where the PLGlu-SS-lithium ion-sieve is used for adsorption in the solution with a Li⁺ concentration of 20 mg/L, the adsorption saturation is achieved within 7 h to 8 h, and an adsorption amount after 8 h is calculated to be 8.123 mg by measuring a residual Li⁺ concentration in the solution. Thus, an adsorption capacity of the PLGlu-SS-lithium ion-sieve in the solution with a Li⁺ concentration of 20 mg/L is 4.0615 mg/g. In contrast, for the H₃LiMnTi₄O₁₂ lithium ion-sieve, the adsorption saturation is approached after 15 h, and an adsorption amount after 15 h is 7.658 mg. Thus, an adsorption capacity of the H₃LiMnTi₄O₁₂ lithium ion-sieve in the solution with a Li⁺ concentration of 20 mg/L is 3.829 mg/g. Apparently, an adsorption rate of the PLGlu-SS-lithium ion-sieve is higher than an adsorption rate of the H₃LiMnTi₄O₁₂ lithium ion-sieve. Similarly, in the solution with a Li⁺ concentration of 50,000 mg/L, the PLGlu-SS-lithium ion-sieve can reach adsorption saturation after 4.5 h, with an adsorption capacity of 126.563 mg/g; and the H₃LiMnTi₄O₁₂ lithium ion-sieve takes 7.5 h or more to reach adsorption saturation and has an adsorption capacity of 118.237 mg/g. Therefore, the PLGlu-SS-lithium ion-sieve of the present disclosure can significantly increase the adsorption rate while increasing the adsorption capacity.

### Lithium ion desorption experiment:

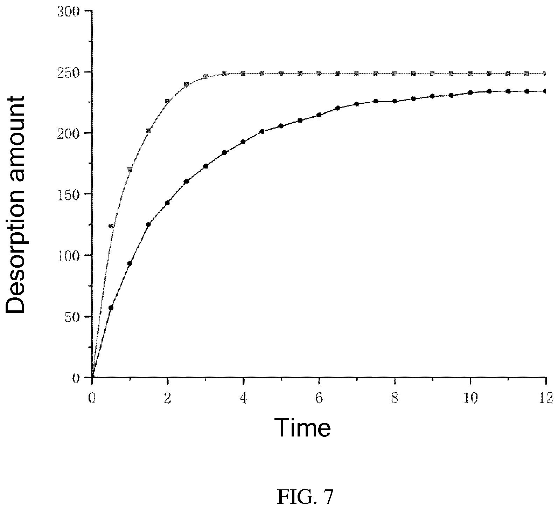

In the lithium ion adsorption experiment, a solution with a Li⁺ concentration of 50,000 mg/L was subjected to adsorption with the PLGlu-SS-lithium ion-sieve for 5 h and the same solution was subjected to adsorption with the H₃LiMnTi₄O₁₂ lithium ion-sieve for 10 h, resulting solutions were centrifuged, resulting supernatants were tested for a lithium ion concentration, and adsorption amounts of the two lithium ion-sieves were calculated to 252.615 mg and 238.442 mg, respectively; and then the two lithium ion-sieves each were added to 2 L of a 2 mol/L hydrochloric acid solution, and resulting mixtures were stirred at room temperature for 12 h, during which a lithium ion concentration in each of the solutions was detected every half hour and a desorption amount was calculated. Results were shown in FIG. 7.

It can be seen from FIG. 7 that, when the PLGlu-SS-lithium ion-sieve in a saturated adsorption state is subjected to desorption in the 2 mol/L hydrochloric acid solution, a desorption amount can reach 98.41% after about 3 h; and when the H₃LiMnTi₄O₁₂ lithium ion-sieve in a saturated adsorption state is subjected to desorption in the 2 mol/L hydrochloric acid solution, a desorption amount is merely 72.40% after 3 h and 93.66% after 7 h, and can reach 98.13% after 12 h. Therefore, it can be known that, when the PLGlu-SS-lithium ion-sieve is subjected to desorption in the 2 mol/L hydrochloric acid solution, the nearly-complete desorption can be achieved in a relatively short period of time, which is uncomparable for the H₃LiMnTi₄O₁₂ lithium ion-sieve.

PLGlu-SS-lithium ion-sieve recycling experiment:

The PLGlu-SS-lithium ion-sieve undergone adsorption and desorption was subjected to adsorption in a solution with a Li⁺ concentration of 50,000 mg/L for 5 h and then to desorption in a 2 mol/L hydrochloric acid solution for 5 h, which was repeated five times. An adsorption amount and a desorption amount each time were calculated, and results were shown in Table 1.

**Table 1 Adsorption-desorption results of PLGlu-SS-lithium ion-sieve**

| | Adsorption amount (mg) | Desorption rate (%) |
|---|---|---|
| Second adsorption-desorption | 249.895 | 99.22 |
| Third adsorption-desorption | 250.089 | 99.32 |
| Fourth adsorption-desorption | 249.957. | 99.15 |
| Fifth adsorption-desorption | 249.735 | 99.05 |
| Sixth adsorption-desorption | 248.568 | 98.89 |

It can be seen from Table 1 that, in the six adsorption-desorption cycles, the adsorption amount tends to decrease, but by a small amount, the desorption rate is still high and can reach about 99%, and the adsorption-desorption cycle is short. Therefore, the PLGlu-SS-lithium ion-sieve has excellent stability and reusability.

In summary, the PLGlu-SS-lithium ion-sieve composite of the present disclosure has sufficient strength support, high structural stability, and excellent cycling performance. Thus, under alkaline adsorption and acidic desorption, a pore size of the composite can be adjusted to provide large adsorption capacity, high adsorption selectivity, and high adsorption efficiency. Therefore, the composite is an efficient lithium ion adsorption material with high adsorption capacity and high stability.

The above examples are merely preferred implementations of the present disclosure, and are not intended to limit the protection scope of the present disclosure. Any nonessential modifications and substitutions made by those skilled in the art on the basis of the present disclosure fall within the protection scope of the present disclosure.

## Claims

1. APLGlu-SS-lithium ion-sieve composite, comprising an H₃LiMnTi₄O₁₂ lithium ion-sieve and poly-γ-glutamic acid (γ-PGA) compounded with the H₃LiMnTi₄O₁₂ lithium ion-sieve, wherein a terminal amino group of the γ-PGA is linked to a disulfide bond-containing group and a terminal carboxyl group of the γ-PGA is bonded with Ti and Mn in the H₃LiMnTi₄O₁₂ lithium ion-sieve.

2. The PLGlu-SS-lithium ion-sieve composite according to claim 1, wherein the disulfide bond-containing group is a group having -CO-R¹-S-S-R²-COOH, wherein R¹ and R² each are linear alkyl with 9 to 16 carbon atoms.

3. The PLGlu-SS-lithium ion-sieve composite according to claim 1, wherein a precursor of the H₃LiMnTi₄O₁₂ lithium ion-sieve is Li₄MnTi₄O₁₂, and Li₄MnTi₄O₁₂ is treated with an acid to obtain the H₃LiMnTi₄O₁₂ lithium ion-sieve.

4. The PLGlu-SS- lithium ion-sieve composite according to claim 1, wherein the γ-PGA has a molar molecular weight of 1,500 g/mol to 5,500 g/mol.

5. A preparation method of a PLGlu-SS- lithium ion-sieve composite, comprising the following steps:
S1. preparation of a lithium ion-sieve: mixing a Mn²⁺-containing aqueous solution and a Ti⁴⁺-containing aqueous solution and adjusting a pH to 10 to 11 with ammonium hydroxide under stirring, adding hydrogen peroxide to oxidize Mn²⁺ into Mn⁴⁺, centrifuging a resulting reaction mixture, washing a resulting precipitate to obtain a solid, adding a LiOH solution to the solid, conducting hydrothermal crystallization to obtain a Li-Mn-Ti composite oxide, and cooling to 90°C to 100°C; and
S2. preparation of the PLGlu-SS-lithium ion-sieve composite: adding PLGlu-SS to the Li-Mn-Ti composite oxide to allow a reaction, adding an excess amount of hydrochloric acid after the reaction is completed, stirring a resulting mixture to allow a further reaction for 12 h to 24 h, and subjecting a resulting reaction system to suction filtration to obtain the PLGlu-SS-lithium ion-sieve composite.

6. The preparation method of a PLGlu-SS-lithium ion-sieve composite according to claim 5, wherein a preparation method of the PLGlu-SS comprises the following steps:
S21. adding mercaptoalkyl acid to a solution of hydrochloric acid in dimethyl sulfoxide to allow a reaction under stirring to obtain a disulfide bond-containing compound;
S22. adding the disulfide bond-containing compound to dimethylformamide (DMF), adding o-(7-aza-1H-benzotriazol-1-yl)-N,N,N',N'-tetramethyluronium hexafluorophosphate (HATU) and diisopropylethylamine (DIEA), then adding γ-PGA benzyl ester to allow an another reaction under stirring, and conducting recrystallization with methanol after the another reaction is completed to obtain a crystallization product; and
S23. dissolving the crystallization product in a mixed solvent of dioxane and methanol, adding sodium hydroxide, stirring at room temperature for 1 h to 3 h, and dissolving a resulting precipitate in water and conducting ultrafiltration with an ultrafiltration membrane to obtain the PLGlu-SS.

7. The preparation method of a PLGlu-SS- lithium ion-sieve composite according to claim 6, wherein
in step S21, the reaction is conducted for 12 h to 24 h;
in step S22, a molar ratio of the disulfide bond-containing compound to HATU to DIEA is 1:(2-2.5):(2-3), a molar ratio of the γ-PGA benzyl ester to the disulfide bond-containing compound is 1:(1-2), and the another reaction is conducted at a temperature of 0°C to 25°C for 12 h to 36 h; and
in step S23, a volume ratio of the dioxane to the methanol is (5-2): 1, a concentration of the sodium hydroxide is 2 mol/L to 5 mol/L after the sodium hydroxide is added, and the ultrafiltration membrane has a molecular weight cut-off of lower than 10,000 daltons.

8. The preparation method of a PLGlu-SS-lithium ion-sieve composite according to any one of claims 5 to 7, wherein
Mn²⁺ is provided by one or more selected from the group consisting of manganese sulfate, manganese oxalate, and manganese acetate, and Ti⁴⁺ is provided by one selected from the group consisting of titanium tetrachloride and titanium sulfate.

9. The preparation method of a PLGlu-SS-lithium ion-sieve composite according to any one of claims 5 to 7, wherein
a molar ratio of Mn²⁺ to Ti⁴⁺ is 1:(4-4.5), a molar ratio of LiOH to Ti⁴⁺ is (1-1.2):1, and the hydrothermal crystallization is conducted at a temperature of 750°C to 850°C.

10. Use of a PLGlu-SS-lithium ion-sieve composite in lithium extraction from a salt lake.
